# EUROPÄISCHE PATENTSCHRIFT

(11) **EP 1 922 568 B1**
(45) Veröffentlichungstag und Bekanntmachung des Hinweises auf die Patenterteilung: **28.02.2018**
(21) Anmeldenummer: 06775164.4
(22) Anmeldetag: 31.08.2006
(51) Int. Cl.: G01V 1/104, G10K 15/04

(54) **VERFAHREN UND VORRICHTUNG ZUM ERZEUGEN VON DRUCKWELLEN**
METHOD AND DEVICE FOR GENERATING COMPRESSION WAVES
PROCEDE ET DISPOSITIF DE PRODUCTION D'ONDES DE CHOC

(30) Priorität: 05.09.2005 CH 14372005
(43) Veröffentlichungstag der Anmeldung: 21.05.2008
(73) Patentinhaber: Explo Engineering AG, 5622 Waltenschwil (CH); Rüegg, Hans, 5622 Waltenschwil (CH); Martin GmbH für Umwelt- und Energietechnik, 80807 München (DE); Hitachi Zosen Inova AG, 8005 Zürich (CH)
(72) Erfinder: RÜEGG, Hans, CH-5622 Waltenschwil (CH)
(74) Vertreter: Frei Patent Attorneys
(86) Internationale Anmeldenummer: PCT/CH2006/000471
(87) Internationale Veröffentlichungsnummer: WO 2007/028264

(56) Entgegenhaltungen:
- DE-A1- 2 141 545
- DE-C- 562 368
- US-A- 3 429 396
- US-A- 3 521 725
- US-A- 3 658 268
- US-A- 4 089 702
- US-A- 4 100 991

## Beschreibung

Die Erfindung betrifft ein Verfahren und eine Vorrichtung zur Erzeugung von Druckwellen hoher Intensität gemäss den unabhängigen Patentansprüchen.
In unterschiedlichsten Gebieten sind Vorrichtungen bekannt, welche einen Kraftstoss, beispielsweise eine Druckwelle ausüben, um diesen direkt, z. B. zum Reinigen oder indirekt, z. B. zum Antrieb eines Gegenstandes nutzen, beispielsweise mittels Pressluft.

Die Publikation DE 2141545 A1 offenbart eine seismische Gasexplosionseinrichtung aufweisend ein Gehäuse mit einer Verbrennungskammer und eine zweiten Kammer, wobei ein brennbares Gasgemisch in die Verbrennungskammer eingeführt wird. Ein Kolben in der zweiten Kammerschließt normalerweise einen Gasauslass in die Verbrennungskammer. Die zweite Kammer weist eine Vorspannvorrichtung auf, um normalerweise den Kolben in seine geschlossene Stellung zu drücken.
Der Nachteil bekannter Vorrichtungen ist oft die geringe Stärke des Kraftstosses. Starke Druckstösse können mit Explosivstoffen erzeugt werden, diese erlauben aber keine Wiederholbarkeit, sind in der Handhabung risikoreich und erzeugen giftige Verbrennungsgase. Aufgabe der Erfindung ist es ein Verfahren und eine Vorrichtung zu schaffen, mit der Druckwellen hoher Intensität erzeugt werden können.
Die Aufgabe wird durch das Verfahren und die Vorrichtung gelöst, wie sie in den Patentansprüchen definiert sind.
Im erfindungsgemässen Verfahren und der Vorrichtung wird ein fliessfähiger, explosiver Stoff oder ein fliessfähiges, explosionsfähiges Gemisch, welches durch Vermischung von vorzugsweise an sich nicht explosionsfähigen Komponenten gebildet wird, in einen druckfesten Behälter eingeführt. Die fliessfähigen Stoffe und/oder Stoffgemische sind beispielsweise gasförmig, flüssig, puderförmig oder pulverförmig oder eine Mischung von solchen Komponentenstoffen. Durch Zündung des explosiven Gemisches entsteht ein sehr hoher Gasdruck, welcher durch einen zuvor und im wesentlichen bis zur Zündung des explosionsfähigen Stoffs, verschlossenen Durchgang vorzugsweise gerichtet abgeleitet wird. Der Verschluss bleibt vorzugsweise, je nach Ausführung, bis kurz vor oder nach der Zündung geschlossen.
Es ist möglich den verschlossenen Durchgang direkt durch den Gasdruck zu öffnen, wobei ein möglicher Verschluss beispielsweise in der Art einer Berstscheibe, weggesprengt oder zerstört werden kann. In einer bevorzugten Ausführungsform wird ein Verschluss wieder in eine ursprüngliche Verschlussposition rückgeführt, so dass das Verfahren schnell und repetitiv ausgeführt werden kann.
Ein Verschluss eines druckfesten Behälters, in dem eine Zündung von explosivem Stoff stattfindet, wird bevorzugt durch einen Riegelmechanismus oder durch ein Federelement geschlossen gehalten. Ein Federelement kann eine gewöhnliche Spiralfeder sein, wird jedoch bevorzugt durch eine Gasfeder gebildet.
In einer bevorzugten Ausführungsform der Erfindung wirkt der bei der Zündung des explosiven Materials entstehende Gasdruck der Kraft des Federelements entgegen und öffnet somit den Verschluss, z.B. durch Verdrängen oder Verschieben eines Ventils oder Kolbens. Druckwellen werden dann durch die dafür vorgesehene (n) Öffnung(en) aus dem Behälter, bevorzugt aus der gesamten Vorrichtung freigegeben.

In einer weiteren Ausführungsform wird, um beispielsweise einen, einen Verschluss haltenden, Riegelmechanismus nicht der Wucht des gesamten Gasdruckes auszusetzen, der Riegelmechanismus vorgängig gelöst, beispielsweise durch den Gasdruck selber oder über eine geeignete Hilfseinrichtung. Eine solche Hilfseinrichtung ist beispielsweise ein Hilfskolben, der aufgrund des auf ihn einwirkenden Gasdrucks einen Riegel wegdrückt. Es ist aber auch möglich eine Hilfszündung in einer separaten Kammer durchzuführen, wobei der bei der Hilfszündung entstehende Gasdruck den Riegelmechanismus löst, beispielsweise durch Verschieben eines Hilfskolbens. Die Zündung der eigentlichen Hauptexplosion erfolgt dann bevorzugt über eine Verzögerungsleitung, welche die Zündung von der separaten Kammer in den Behälter leitet.
Wird in einer Vorrichtung ein Federelement, insbesondere eine Gasfeder verwendet, so weist die Vorrichtung vorzugsweise eine Entlastungsvorrichtung auf. Die Entlastungsvorrichtung hat die Funktion, das Federelement nach der Erfüllung seiner Aufgabe teilweise oder vollständig zu entlasten. Ist beispielsweise ein Verschluss in der Form eines Kolbens gestaltet, wird dieser durch den Gasdruck stark beschleunigt, beispielsweise auf eine Geschwindigkeit in der Grössenordnung von 100-300m/s und komprimiert dabei die Gasfeder. Damit diese den Kolben nicht wieder mit sehr hoher Geschwindigkeit und Wucht zurückdrückt, wird die Entlastungsvorrichtung vorzugsweise in einem starken bzw. zumindest annähernd maximal komprimierten Zustand aktiviert, welche Gas beispielsweise durch definierte Ablassöffnung aus der Gasfeder entweichen lässt.
Eine zeitliche Abstimmung zwischen Zündung des explosiven Materials und Auslösen einer Entlastungsvorrichtung sollte beachtet werden. Wird eine Entlastung zu früh ausgelöst, kann das Federelement seine Wirkung nicht voll ausüben, wird sie zu spät ausgelöst kann ein zurückprallender Kolben o.ä., Vorrichtungsteile beschädigen.

Eine Verzögerung zwischen Zündung und Entlastung kann beispielsweise dadurch erreicht werden, dass ein Teil des Gasdruckes resp. der Explosion über eine Verzögerungsleitung geführt wird und die Entlastung auslöst, bspw. durch Einwirken auf ein eine Ablassöffnung verschliessendes Ventil.
Es ist jedoch auch möglich, dass ein weggedrückter Verschluss selber die Entlastung auslöst, beispielsweise durch Verschieben eines eine Ablassöffnung verschliessenden Kolbens.
Es kann auch der Verschluss selber durch seine Bewegung, eine Ablassöffnung freigeben, so dass keine zusätzlichen Vorrichtungsteile benötigt werden. Es sind verschiedenste Arten von Entlastungsvorrichtungen möglich. Eine weitere Ausführungsform, welche im wesentlichen direkt den bei der Zündung entstehenden Gasdruck verwendet, nutzt den Druckunterschied, welcher entsteht, wenn eine Blendeneinrichtung in einer ansonsten im wesentlichen gleichen Leitungen angebracht ist. Die Leitungen führen von der Explosionskammer in zwei unterschiedliche, durch einen Kolben getrennte Kammern. Der Druck in der einen Kammer mit der Zuleitung ohne Blende steigt schneller an und auch wieder ab, so dass der Kolben jeweils in die Richtung der Kammer bewegt wird, in der ein niedrigerer Druck herrscht. Diese Kolbenbewegung kann direkt in eine Bewegung beispielsweise eines Ventils eingebracht werden.
Die Zündung des explosiven Stoffs oder Gemisches kann in an sich bekannter Weise erfolgen, bspw. durch Zündkerzen, Glühkerzen, Laserzündung etc.

Werden für das Verfahren mehrere fliessfähige Komponenten zur Herstellung eines explosionsfähigen Gemisches verwendet, so werden die Komponenten vorzugsweise getrennt durch separate Zufuhrleitungen dem Behälter zugeführt. Die Komponenten können jedoch auch zusammen und/oder zeitlich versetzt eingeführt werden. Es ist auch möglich einzelne Komponenten unmittelbar vor dem Einbringen zu mischen.

Der oder die Durchgänge, durch welche eine Druckwelle die Vorrichtung verlässt, kann in wesentlichen in jedem Winkel zur Vorrichtung angeordnet sein. Beispielsweise ist der Durchgang oder die Öffnung derart angeordnet, dass eine Druckwelle die Vorrichtung im wesentlichen entlang einer Längsachse der Vorrichtung oder im wesentlichen senkrecht zur Längsachse verlässt.

Das erfindungsgemässe Verfahren und die Vorrichtung werden bevorzugt zum Reinigen von grossen Anlagen, wie Kesselanlagen, Heizkesseln, Hochkaminen, von Schlacken oder Ablagerungen etc. verwendet. Dort besteht der wesentliche Vorteil darin, dass die einzelnen Reinigungszyklen sehr schnell und mehrfach wiederholt werden können. Auch ist die Verwendung eines explosiven Gasgemisches zur Erzeugung von Druckwellen relativ günstig und es kann eine genügend grosse Intensität von Druckwellen hergestellt werden. Das Zuführen von an sich nicht explosionsfähigen Stoffen, zu einem Zeitpunkt kurz vor dem Auslösen der Explosion, erhöht zudem die Sicherheit von Mensch und Anlagen massiv. Auch ermöglicht es ein Reinigen bei noch warmem, oder in einem heissen, in Betrieb befindlichen Behälter, da keine explosiven Stoffe über längere Zeit der heissen Umgebung ausgesetzt sind.

Eine weitere Verwendungmöglichkeit ist die Anwendung als Setzgerät für Befestigungsdübel oder als Antrieb für einen Meisselhammer. Verschiedene weitere Verwendungsmöglichkeiten sind denkbar, bei denen ein hoher Kraftstoss bzw. eine Druckwelle hoher Intensität benötigt wird.

In einer bevorzugten Ausführungsform fällt bei allen diesen und weiteren Verwendungen ein manuelles Vorbereiten der Vorrichtung, wie ein Füllen resp. ein Einsetzen eines Verschlusspfropfens weg. Keine Vorrichtungsteile werden zerstört oder weggeblasen oder -gesprengt, so dass die Vorrichtung mehrmals verwendet werden kann. Eine Dosierung der Explosionsstärke ist über einen einstellbaren Vordruck möglich. Falls falsch dosiert wurde, kann dies einfach durch Ablassen beseitigt werden.

Im Folgenden wird die Erfindung anhand beispielhafter Ausführungsformen dargestellt. Dabei zeigt:
- Fig. 1: eine bekannte Ausführungsform eines Druckwellengenerators,
- Fig. 2: ein repetitiv betreibbarer Druckwellengenerator,
- Fig. 3: Aussenansicht des Generators aus Fig. 2,
- Fig. 4: Vorrichtung mit externer Gasfeder,
- Fig. 5: Auslöseklinke für einen Verschluss,
- Fig. 6a, b: weiterer Riegelmechanismus in Längs- und Querschnitt,
- Fig. 7: Entlastungsmechanismus für Federelement,
- Fig. 8: Verwendung der Vorrichtung als Meisselhammer,

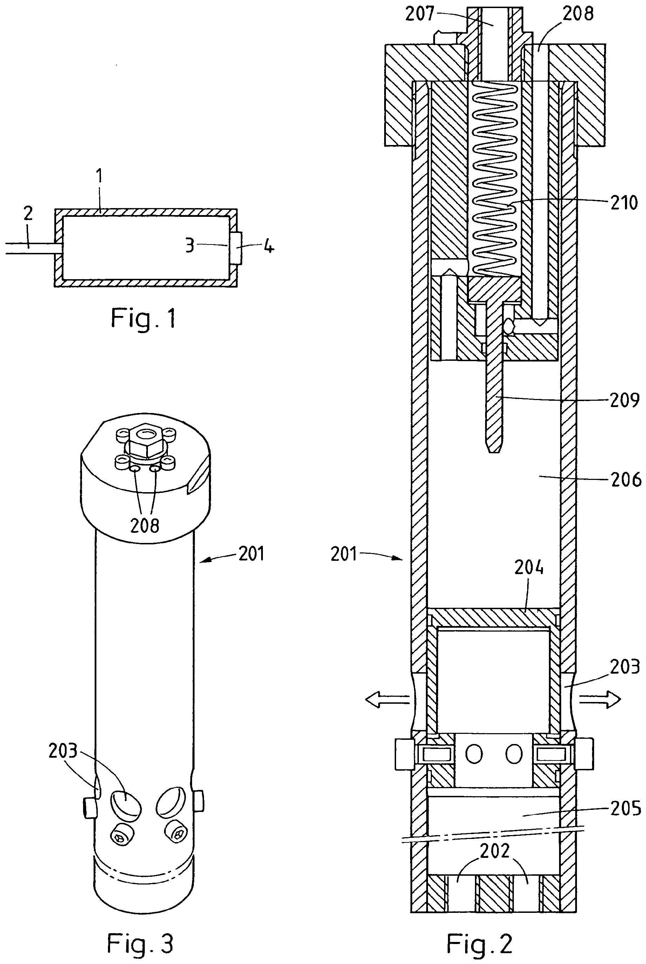

**Figur 1** zeigt einen druckfesten Behälter 1 mit einer Zufuhrleitung 2 für fliessfähige Stoffe, wie bspw. gasförmige, flüssige, puder- oder pulverförmige Materialien, welche einzeln oder in Verbindung ein explosives Gemisch bilden. Die einzelnen Komponenten werden vorzugsweise getrennt in den Behälter 1 geleitet und erst dort zu einem explosiven Gemisch vermischt. Dies kann durch getrennte Leitungen oder durch ein zeitlich versetztes Einleiten geschehen. Solche Komponenten sind typischerweise ein Brennstoff und ein Oxidationsmittel, flüssig oder gasförmig, wie beispielsweise Aethan und Sauerstoff.
Der Behälter 1 weist eine Öffnung 3 auf, welche jedoch mit einem Verschluss 4 geschlossen gehalten wird. Der Verschluss ist in die Öffnung ein- oder aufgebracht, derart, dass er dem im Behälter vorherrschenden Fülldruck standhält, jedoch nur solange bis er durch die Druckwelle einer Explosion zerstört oder weggesprengt wird. Der Verschluss 4 ist in diesem Fall also eine Berstscheibe. Das explosive Gas kann in an sich bekannter Weise gezündet werden, bspw. mit Hilfe einer Zündvorrichtung (nicht dargestellt), z. B. einer Zündkerze, Glühkerze.
Der bei der Explosion entstandene Gasdruck entweicht durch die vordefinierte Öffnung 3 in der dadurch vorgegebenen Richtung. Diese Vorrichtung eignet sich speziell für die Reinigung von Anlagen wo eine grosse Reinigungskraft bzw. Druckwellen hoher Intensität benötigt wird, z. B. von verschlackten/verstopften Rohren, Kesselanlagen, Hochkaminen etc...

Im allgemeinen, und insbesondere wenn ein explosives Gemisch verwendet wird, werden dessen einzelne Komponenten, welche beide vorzugsweise nicht explosiv sind, erst kurz vor ihrem Einsatz in den druckfesten Behälter gefüllt. Dies erhöht die Sicherheit und ermöglicht auch ein Lagern von an sich nicht explosiven Stoffen.
Ein Behälter ist dazu vorzugsweise aus einem Gemisch aus Stahl und Karbonfasern hergestellt. Der Stahl garantiert die Dichtheit des Behälters von im Behälter befindlichen Stoffen und die Karbonfasern die Festigkeit gegenüber dem im Behälter herrschenden Druck und bei der Explosion. Durch die Verwendung von Karbonfasern kann ein besonders leichter und dennoch stabiler Behälter bereitgestellt werden. Es sind auch andere Materialien zur Herstellung solcher druckfester Behälter möglich, wie z. B. Stahl alleine. Typische Einfülldrücke liegen im Bereich von 20-50 bar. Explosionsdrücke sind in etwa 25-mal höher als die Einfülldrücke.
Bei einer nicht repetitiv betriebenen Vorrichtung ist ein Verschluss bevorzugt aus einem Stück Holz, z.B. einer Holzscheibe, gefertigt. Durch die Verwendung von Holz werden Schäden durch herumfliegende Teile der Berstscheibe vermieden. Die Holzscheibe wird durch die Explosion weitgehend zerstört. Zur Sicherstellung der Gasdichtheit kann die Holzscheibe zumindest einseitig oder im Bereich der Verbindung zum Behälter mit Gummi beschichtet sein. Vorzugsweise wird diese Verbindung hergestellt, indem eine Berstscheibe mit einem Schraubflansch am Behälter festgeklemmt wird. Eine runde Berstscheibe kann auch durch einen runden, mit einem Loch als Ablassöffnung versehenen Schraubdeckel auf den Behälter geschraubt werden.
In **Figur 2** ist eine Vorrichtung 201 gezeigt, mit welcher wiederholt Druckwellen erzeugt werden können. Die Vorrichtung ist im wesentlichen aus einem Rohr, z.B. einem Stahlrohr, hergestellt. Sie weist eine Explosionskammer 205 und eine Gasfederkammer 206 auf, zwischen welchen ein Kolben 204 angeordnet ist. Der Kolben 204 dichtet die beiden Kammern voneinander ab. Die dazu nötige Kraft wird durch Druck eines Gases, z.B. Luft, Stickstoff, CO2 etc., hergestellt, welches Gas durch eine dafür vorgesehene Gaseinfüllöffnung 207 in die Gasfederkammer 206 geleitet wird. Der Kolben 204 verschliesst gleichzeitig auch Öffnungen 203 im Rohr, welche zum Entweichen von durch die Explosion entstehenden Gasdrucks, den eigentlichen Druckwellen, aus der Vorrichtung in der Rohrwand eingebracht sind.
Die Explosionskammer 205 weist zwei Zufuhröffnungen 202 auf, durch welche Komponenten eines explosiven Gemischs in die Kammer 205 getrennt eingeleitet werden. Die getrennte Führung der Komponenten garantiert, dass ein explosives Gemisch erst in der Vorrichtung und erst kurz vor einer Zündung hergestellt wird. Die zur Explosion verwendeten Gase oder anderen fliessfähigen Materialien werden bis zu einem Einfülldruck, der je nach Verwendung und je nach Festigkeit der Explosionsvorrichtung unterschiedlich ausfallen kann, eingefüllt. Der Druck in der Gasfederkammer ist so hoch, dass der Kolben 204 die Explosionskammer im wesentlichen gasdicht abdichtet.
Durch das Zünden des in der Explosionskammer befindlichen explosiven (Gas-) Gemisches entsteht ein extrem hoher Gasdruck, der bspw. in etwa 25 mal höher liegt als der Einfülldruck. Durch die auf den Kolben 204 wirkende Kraft wird dieser weggedrückt und komprimiert dabei das Gas in der Gasfederkammer. Das immer mehr komprimierte Gas wirkt wie ein Federelement (= Gasfeder) für den Kolben und bremst seine Geschwindigkeit ab. Dadurch können Beschädigungen am Kolben und an der Vorrichtung verhindert werden. Das Verschieben des Kolbens gibt die mehreren Öffnungen 203 in der Rohrwand frei und die Druckwelle der Explosion entweicht durch diese Öffnungen. Die Verwendung einer Gasfeder weist gegenüber anderen Federelementen, wie bspw. Stahlfedern, Flüssigkeiten, den Vorteil auf, dass sie dank geringer Trägheit viel reaktionsschneller sind, flexibel an unterschiedlich zu haltende Drucke anpassbar, sauberer und im wesentlichen wartungsfrei ist.

Zur Entspannung der Gasfeder, damit diese den Kolben nicht wieder in Richtung der Explosionskammer zurückschnellen lässt, ist eine Entlastungsvorrichtung vorgesehen. Diese umfasst einen Ablass 208 welcher von der Gasfederkammer 206 aus der Vorrichtung hinaus führt und einen Stössel 209, im wesentlichen einen Kolben mit in die Gasfederkammer ragendem Stift. Der Stössel 209 dichtet die Gasfederkammer durch die Kraft einer Spiralfeder 210 gasdicht ab. Der bei der Explosion zurückweichende Kolben 204 trifft auf den Stift und schiebt dabei den Stössel gegen die Federkraft nach hinten und gibt zeitverzögert zur Explosion den Ablass 208 frei. Das durch den Kolben komprimierte Gas kann nun entweichen. Der gesamte Ablauf des Verfahrens, d.h. die Freigabe des Ablasses, ist so aufeinander abgestimmt, dass die Gasfeder den Kolben abbremsen kann, ihn aber möglichst nicht mehr mit hoher Kraft zurückbefördern kann. Die Kraft der Gasfeder kann dazu verwendet werden, den Kolben wieder in seine Ursprungsposition, d.h. der Verschlussposition zur Explosionskammer 205 zu bringen. Ein erneutes Füllen der Gasfederkammer über die Gasleitung 207 drückt den Kolben wieder gasdicht an die Explosionskammer. Diese kann mit den für eine nächste Explosion benötigten Stoffen gefüllt werden und die Vorrichtung ist bereit für die Erzeugung der nächsten Druckwelle. Ein solcher Ablauf wird vorzugsweise automatisch gesteuert und kann mehrmals wiederholt werden.

Dieses Verfahren ermöglicht es sehr schnell, wiederholt Druckwellen sehr hoher Intensität zu erzeugen. Dies ist mit keiner bekannten Vorrichtung resp. keinem bekannten Verfahren möglich.

Falls gewünscht, kann die Explosionskammer oder die gesamte Vorrichtung vor, während und/oder nach der Zündung der Explosion gekühlt werden.

Die Entweichrichtung des Gasdruckes der Explosion geschieht allgemein vorzugsweise gerichtet und in dieser Ausführungsform senkrecht zur Längsachse der Vorrichtung. Diese Anordnung eignet sich sehr gut für beispielsweise Reinigungen in grösseren Behältern und Anlagen, wo ein möglichst zylindrischer Bereich durch die Druckwellen erreicht werden soll. Für andere Anwendungen sind Vorwärtsrichtungen der Druckwellen gewünscht, welche durch eine unterschiedliche Konstruktion der Vorrichtung oder eine Umleitung der Richtung des Gasdruckes erreichbar sind.

Es ist ferner auch möglich die Bewegung des Kolbens zu nutzen und beispielsweise anstelle oder zusätzlich zur Entlastungsvorrichtung einen Gegenstand anzutreiben, wobei je nach Verwendung im wesentlichen der Kolben selber als dieser Gegenstand ausgebildet sein kann. Beispielsweise kann der Kolben einen Dübel antreiben und die Vorrichtung damit in einem Setzgerät für Dübel untergebracht sein, oder der Kolben kann als Antrieb für einen Hammer oder Meissel dienen. In einer weiteren Ausführungsform der Erfindung wird der Kolben zum Einrammen von Pfählen (anstelle eines Dampfhammers) verwendet.

**Figur 3** zeigt eine Aussenansicht der Vorrichtung 201 aus Figur 2 mit regelmässig über den Umfang des rohrförmigen druckfesten Behälter angeordneten Entweichöffnungen 203 für die Druckwellen. Während der Behälter im wesentlichen aus einem Stück gefertigt ist, ist das die Ablassöffnungen 208 aufweisende Ende separat am Behälter befestigt, z. B. auf- bzw. angeschraubt. Dies ermöglicht ein einfaches Einbauen oder Ersetzen der Entlastungsvorrichtung.

Eine beispielhafte Angabe für Grössen für eine Vorrichtung gemäss den Figuren 2 und 3 sind: ca. 50mm Aussendurchmesser des Rohres; Länge der Explosionskammer ca. 500mm; Länge der Gasfederkammer inkl. Entweichvorrichtung ca. 200-220mm; Kolbenlänge ca. 30-40mm; Entweichöffnungen ca. 15-20mm. Ein Vordruck in der Explosionskammer beträgt beispielsweise 35 bar, und der Explosionsdruck beispielsweise das 25fache, also 875 bar. Der Vordruck in der Gasfederkammer beträgt ca. 40 bar, wobei die Luft in der Gasfederkammer durch den Kolben auf ca. das 15fache zusammengedrückt wird, so dass maximal ca. 600bar herrschen. Die Kolbengeschwindigkeit liegt bei ca. 100m/s.

Diese Grössen sind jedoch je nach Anwendung und Explosionsdruck im wesentlichen beliebig veränderbar.

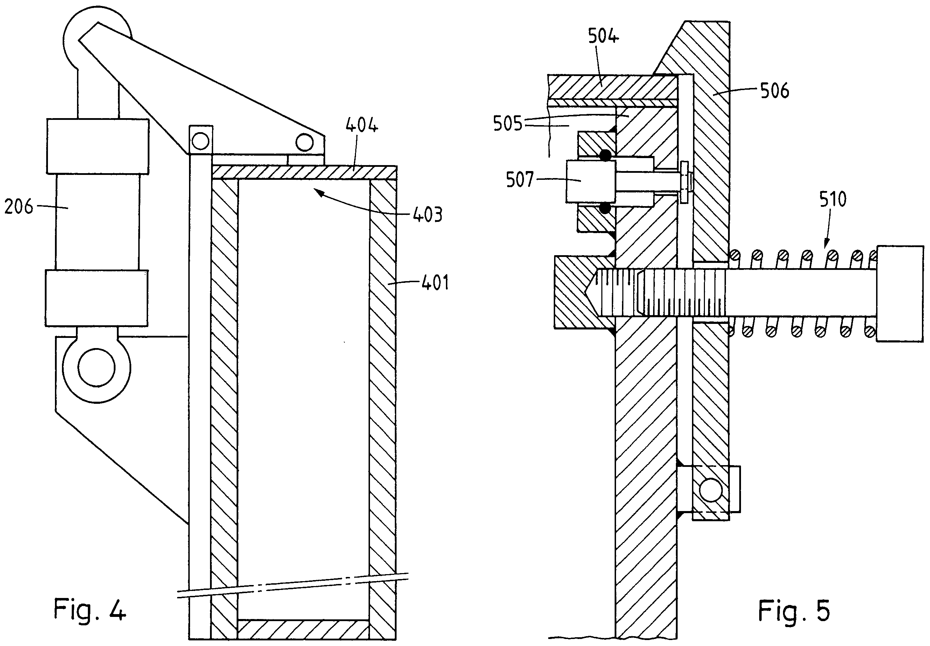

In **Figur 4** ist eine Vorrichtung gezeigt, in welcher eine Gasfederkammer 206 separat, d.h. nicht im eigentlichen druckfesten Behälter, mit dem die Druckwellen generiert werden integriert ist. Figur 4 zeigt einen rohrförmigen druckfesten Behälter 401 zur Aufnahme eines fliessfähigen explosiven Gemisches. Details der Vorrichtung, wie Zufuhrleitungen, Zündvorrichtung, allenfalls Entlastungsvorrichtungen etc. sind nicht dargestellt. Das eine Ende des Rohres, welches als Öffnung 403 zum Entweichen von Gasdruck dient, ist mit einem Verschluss 404 verschlossen. Der Verschluss ist wie eine Klappe gestaltet, welche über ein Scharnier mit der parallel zum Behälter geführten Gasfederkammer 206 verbunden ist. Durch den Explosionsdruck wird die Klappe gegen den Druck der Gasfeder geöffnet, so dass die Druckwelle entweichen kann. Die Gasfeder stösst die Klappe wieder zu und die Vorrichtung ist bereit für die Erzeugung der nächsten Druckwelle.

Die Gasfederkammer ist am Behälter befestigt, wobei in der Befestigung ein zusätzliches Dämpfungselement vorhanden sein kann, welches zusätzlich Energie der explosionsartig aufgehenden Klappe aufnimmt. Die Gasfeder kann auch durch ein anderes Federelement ersetzt werden, bspw. durch eine gewöhnliche Spiralfeder.

In **Figur 5** ist ein Ausschnitt einer Vorrichtung gezeigt, in welcher ein eine Entweichöffnung verschliessender Verschluss 504, z. B. ein Ventil oder ein Kolben, nicht durch ein Federelement, sondern durch einen Verriegelungsmechanismus am druckfesten Behälter 505 bzw. an einer Explosionskammer gehalten wird. Ein Hilfskolben 507, welcher in der Explosionskammer angeordnet und durch die Behälterwand geführt ist, wird durch den Druck der Explosion gegen einen den Verschluss 504 haltenden Riegel 506 gedrückt. Der Hilfskolben sollte dabei möglichst leicht gestaltet sein, so dass er schneller bewegt wird als der Verschluss selber, so dass die Entriegelung zeitlich noch vor dem Aufbau des vollen Drucks auf den Verschluss erfolgt. Der Riegel 506 ist an einer Drehachse gelagert und dreht sich vom Behälter weg und gibt dadurch den Verschluss 504 frei. Der Verriegelungsmechanismus weist zudem ein Federelement 510 für den Riegel auf. Dieses ist im wesentlichen eine durch den Riegel geführte und in der Behälterwand eingebrachte Schraube oder Stift, wobei sich zwischen Riegel und Schraubenkopf eine Feder befindet. Diese hält den Riegel in Verschlussposition, solange keine Explosion im Behälter gezündet wird und dämpft zudem den Rückschlag des Riegels 506.

Die Auslösung eines Verriegelungsmechanismus kurz vor der eigentlichen Explosion und nicht durch die Explosion selber schützt die Vorrichtung, insbesondere den Verriegelungsmechanismus, vor Zerstörung oder vorzeitiger Abnutzung. Ohne Explosionsverzögerung würden entsprechend viel höhere Kräfte auf diese Vorrichtungsteile wirken.

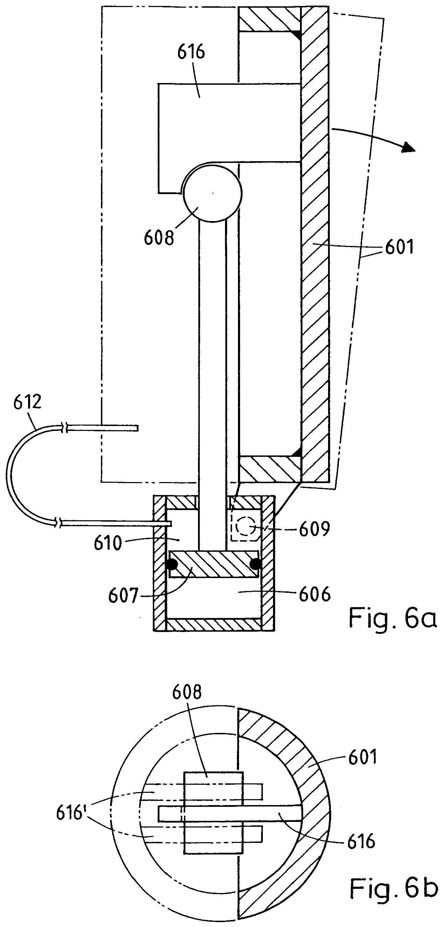

**Figuren 6a und 6b** zeigen Ausschnitte eines Längs- und Querschnittes einer Vorrichtung mit einem Verriegelungsmechanismus, welcher über eine Hilfsexplosion ausgelöst wird. Der druckfeste Behälter 601 ist wiederum rohrförmig aufgebaut und besteht aus zwei Hälften in der Form von Halbschalen. Der Übersicht halber ist nur eine Hälfte des Behälters im Detail gezeigt. Im Inneren an der Behälterwand ist ein Riegel 616 angebracht, welcher mit einem hinteren Ende eines Hilfskolbens 607 zusammenwirkt. Die gegenüberliegende Behälterhälfte weist entsprechende Riegel 616' auf.
Steht das hintere Ende 608 des Hilfkolbens 607 in Verbindung mit den Riegel 616, 616', so sind die beiden Behälterhälften gasdicht geschlossen. Wird der Hilfskolben nach unten verschoben, löst sich der Riegelmechanismus und die Behälterwand dreht sich um eine Drehachse 609 nach aussen (Pfeilrichtung), wobei der Behälter geöffnet und der Gasdruck freigegeben wird. Der Verriegelungsmechanismus wird über den Hilfskolben 607 gesteuert. Das vordere Ende des Kolbens ist in einer separaten Kammer untergebracht und teilt diese Kammer in zwei Teilkammern 606, 610. Eine erste Teilkammer 606 wird als Gasfederkammer verwendet, wobei über den darin herrschenden Fülldruck der Hilfskolben in Verriegelungsposition gehalten wird. In der von der ersten Teilkammer 606 gasdicht abgetrennten zweiten Teilkammer 610 wird eine Hilfsexplosion gezündet. Die für diese Explosion verwendeten Stoffe sind vorzugsweise dieselben wie für die Hauptexplosion im Behälter 601. Der durch die Hilfsexplosion verursachte Druck überwindet die Kraft der Gasfeder in der ersten Teilkammer, so dass sich der Kolben nach unten bewegt und den Riegel 616 freigibt.
Um Hilfs- und Hauptexplosion zeitlich optimal zu koordinieren und um mit einer einzigen Zündvorrichtung auszukommen, wird die Hilfsexplosion über eine Verzögerungsleitung 612 in den Behälter geführt. Es hat sich bewährt, die Verzögerungsleitung aus einem Röhrchen von mind. ca. 2mm Durchmesser herzustellen um eine Durchleitung der Explosion sicherzustellen. Bei einer Explosionsgeschwindigkeit von ca. 3000m/s sollte die Verzögerungsleitung in etwa 3m lang sein, wenn eine Verzögerung der Hauptexplosion um eine Millisekunde gewünscht ist.

Es ist auch möglich, unterschiedliche Verriegelungsmechanismen zu kombinieren. Beispielsweise können mit einem Verriegelungsmechanismus die beide Hälften des Behälters aus Figur 6a, b von aussen gehalten werden und durch einen Hilfskolben plus Riegel oder einen Hilfskolben und eine Hilfsexplosion gelöst werden.

Der in der Figur 6a,6b beschriebene Riegelmechanismus ist beispielsweise auch für einen Behälter mit Verschluss verwendbar. Die gezeichnete Behälterhälfte entspräche dann einem Verschluss und die nicht gezeichnete einem Behälter. Dabei wäre typischerweise nur der Verschluss mit einem Riegel 616 versehen.

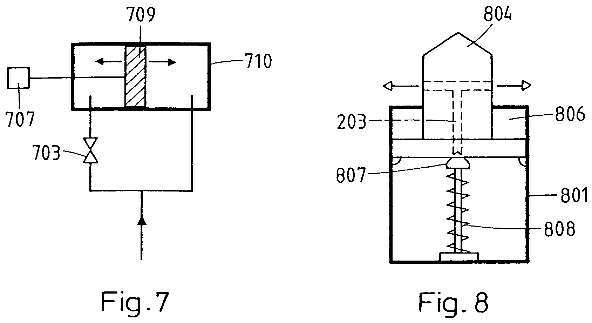

In **Figur 7** ist sehr schematisch ein Beispiel eines Entlastungsmechanismus gezeigt, wie er bspw. in der Vorrichtung der Figur 2 verwendet werden kann. Das Prinzip beruht darauf, dass ein in einer Achse bewegbarer Kolben 709 aufgrund unterschiedlicher vorherrschender Druckverhältnisse auf seiner Vor- und Rückseite entlang dieser Achse verschoben wird. Der Kolben ist dabei mit einem Ventil 707 verbunden, welches aufgrund der Kolbenbewegung geöffnet und ggf. auch wieder geschlossen werden kann. Zur sicheren Schliessung des Ventils kann auch eine definierte Kraft, z.B. einer Feder, permanent auf das Ventil einwirken, welche Kraft zeitweise durch den Kolben überwunden wird.

Der Kolben 709 befindet sich in einer geschlossenen Kammer 710 und teilt diese in eine erste und eine zweite Teilkammern. Die erste Teilkammer weist eine erste Zu- bzw. Ableitung auf, die zweite Teilkammer weist eine zweite Zu- bzw. Ableitung auf. Die erste und die zweite Zu- bzw. Ableitung, sind beide mit einer gemeinsamen Zu- bzw. Ableitung verbunden. In der ersten Zuleitung ist eine Blende 703 eingebracht, welche das Durchströmen von Gas, ggf auch von Flüssigkeit, behindert. Wird nun Gas zugeführt, steigt der Druck in der zweiten Teilkammer, welche keine Blende in der Zufuhrleitung aufweist, schneller an als der Druck in der ersten Teilkammer. Dadurch verschiebt sich der Kolben in die Richtung der ersten Teilkammer und schliesst das Ventil 707 respektive hält das Ventil 707 in der geschlossenen Position. Findet nun ein Druckabfall in der Leitung statt, wirkt sich dies wiederum vorübergehend stärker auf die zweite Teilkammer aus, so dass durch den Überdruck in der ersten Teilkammer, der Kolben in Richtung der zweiten Teilkammer geschoben wird und dabei das Ventil 707 öffnet.
In **Figur 8** ist sehr schematisch eine weitere Ausführungsform der Erfindung als Antrieb eines Meissels mit Sprengvorrichtung, wie sie beispielsweise im Berg- oder Tunnelbau als Teil einer Maschine Verwendung finden kann. Ein druckfester Behälter 801 wird in einem Teil mit einem explosionsfähigen Stoff oder Stoffgemisch gefüllt. Ein Kolben, welcher an einem Ende als Meissel 804 ausgebildet ist dichtet diesen Teil des Behälters gasdicht ab. Der dafür nötige Gegendruck stammt von einem als Gasfeder wirkenden, mit Luft oder einem anderen Gas gefüllten Teil der Kammer, welcher sich auf der gegenüberliegenden Seite des Kolbens befindet. Im Meissel selber befinden sich ein oder mehrere Durchgänge 203, die vorzugsweise zunächst verschlossen sind. Durch den Druck der Explosion wird nun einerseits der Meissel nach vorne getrieben um Stein, Mauern etc. zu bearbeiten. Gleichzeitig werden die Durchgänge 203 im Meissel freigegeben, so dass die Druckwelle durch seitlich im Meissel eingebrachte Durchgänge entweichen kann. Diese Druckwelle kann dazu verwendet werden, die Meisselwirkung zu unterstützen und Stein durch die Druckwelle seitlich wegzusprengen.

Die Freigabe der Durchgänge und dadurch die Freisetzung des Explosionsdruckes kann in einer weiteren Ausführungsform der Erfindung über ein weiteres Ventil 807 erfolgen. Dieses Ventil wird mit einer Schliessfeder 808 gegen den Kolben des Meissels 804 gedrückt, und dadurch bei der Explosion zuerst ein Stück weit mit dem Kolben mitbewegt, dann aber geöffnet, bevor der Kolben seine Endposition erreicht.

## Patentansprüche

1. Verfahren zur Erzeugung von Druckwellen hoher Intensität, indem in einen druckfesten Behälter (1) ein fliessfähiger explosionsfähiger Stoff oder fliessfähige, bei Vermischung ein explosionsfähiges Gemisch bildende Komponenten eingeführt werden, indem der explosionsfähige Stoff oder das Gemisch gezündet und dadurch zur Explosion gebracht wird, und indem der durch die Explosion entstandene Gasdruck durch einen zuvor verschlossenen Durchgang (203) abgeleitet wird, und indem ein Verschluss vor einer Explosion mittels einer Gasfeder geschlossen gehalten wird,
**dadurch gekennzeichnet,**
**dass** die Gasfeder einen Entlastungsmechanismus aufweist, derart, dass nach der Explosion und einer Komprimierung der Gasfeder, eine Ablassöffnung (208) in einer Gasfederkammer (206) der Gasfeder geöffnet wird.

2. Verfahren nach Anspruch 1, wobei die Zündung in einer separaten Kammer erfolgt und die Explosion über eine Verzögerungsleitung (612) in den Behälter (1) geleitet wird und dort eine Hauptexplosion auslöst.

3. Verfahren nach Anspruch 1 oder 2, wobei der bei der Zündung entstandene Gasdruck den Verschluss gegen die Kraft der Gasfeder öffnet und dadurch eine Öffnung zum Entweichen von Druckwellen aus der Vorrichtung (201) freigegeben wird.

4. Verfahren nach einem der Ansprüche 1 bis 3, wobei der Gasdruck der Explosion einen Kolben (204) gegen die Kraft der Gasfeder bewegt, der Kolben (204) eine Nutzarbeit leistet, beispielsweise als Hammer oder als Meissel, und gegen Ende eines Kolbenweges eine Öffnung (203) zum Ableiten des Gasdrucks respektive von Verbrennungsgasen der Explosion geöffnet wird.

5. Verfahren nach einem der vorangehenden Ansprüche, wobei ein Verschluss des Durchgangs (203) durch die Explosion geöffnet wird und anschliessend wieder in eine Verschlussposition rückgeführt wird.

6. Verfahren nach einem der vorangehenden Ansprüche, wobei der bei der Zündung entstandene Gasdruck einen Riegelmechanismus auslöst, der den Verschluss freigibt.

7. Verfahren nach Anspruch 6, wobei der durch die Zündung in einer separaten Kammer entstandene Gasdruck den Riegelmechanismus auslöst.

8. Verfahren nach einem der vorhergehenden Ansprüche, wobei, im Falle von mehreren fliessfähigen Komponenten, diese getrennt dem Behälter (1) zugeführt werden.

9. Verfahren nach einem der vorhergehenden Ansprüche, wobei als eine Komponente eines explosionsfähigen Gemisches Sauerstoff als Oxydationsmittel und/oder eine gasförmige Kohlenwasserstoffverbindung wie beispielsweise Äthan verwendet wird.

10. Verfahren nach einem der vorhergehenden Ansprüche, wobei das gasförmige explosionsfähige Gemisch unter atmosphärischem Überdruck verwendet wird.

11. Vorrichtung (201) zum Erzeugen von Druckwellen hoher Intensität, aufweisend einen druckfesten Behälter (1) mit einer Zufuhröffnung (207) zum Einführen eines fliessfähigen explosionsfähigen Stoffs oder von fliessfähigen Komponenten, die bei Vermischung ein explosionsfähiges Gemisch bilden, aufweisend eine Zündvorrichtung und einen Durchgang (203) zum gerichteten Entweichen von durch die Zündung des explosionsfähigen Stoffs oder des Gemisches entstandenen Gasdrucks,
wobei der Durchgang (203) ein Verschlussmittel aufweist und von diesem Verschlussmittel bis im Wesentlichen zum Zeitpunkt der Zündung geschlossen gehalten wird, wobei das Verschlussmittel mit Hilfe einer Gasfeder in der Form von komprimiertem Gas in einem geschlossenen Volumen oder einer Gasfederkammer (206), in eine ursprüngliche Verschlussposition rückführbar ist, **gekennzeichnet durch** eine Entlastungsvorrichtung für die Gasfeder in der Form einer verschliessbaren Ablassöffnung (208) der Gasfederkammer (206).

12. Vorrichtung (201) nach Anspruch 11, mit einer im Wesentlichen geschlossenen Kammer (610) für eine Hilfsexplosion, mit einer Verzögerungsleitung (612) zum Leiten der Hilfsexplosion in den druckfesten Behälter (1) zum Auslösen einer Hauptexplosion.

13. Vorrichtung (201) nach einem der Ansprüche 11 oder 12, wobei die Entlastungsvorrichtung über einen mit einer Feder beaufschlagten Stössel (209) betätigbar ist, und der Stössel (209) wiederum durch das Verschlussmittel betätigbar ist.

14. Vorrichtung (201) nach Anspruch 11, wobei die Entlastungsvorrichtung eine mit einem Ende mit dem Behälter (1) verbundene Verzögerungsleitung beinhaltet, deren anderes Ende mit einem Ventil (707) zur Entlastung der Gasfederkammer (206) verbunden ist, wobei das Ventil (707) durch einen durch die Verzögerungsleitung geleiteten Explosionsdruck betätigbar ist.

15. Vorrichtung (201) nach einem der Ansprüche 11-14, wobei die Vorrichtung(201) eine Längsachse definiert und der Durchgang (203) oder mehrere Durchgänge (203) derart angeordnet ist bzw. sind, dass eine oder mehrere Druckwellen die Vorrichtung (201) im Wesentlichen in Richtung der Längsachse oder im Wesentlichen senkrecht zu dieser Längsachse verlassen.

16. Verwendung der Vorrichtung (201) gemäss einem der Ansprüche 11-15 oder des Verfahrens gemäss einem der Ansprüche 1-10 zum Reinigen von Kesselanlagen.

## Claims

1. A method for producing pressure waves of high intensity, by way of introducing a flowable, explosive substance or flowable components forming an explosive mixture on mixing, into a pressure-tight container (1), by way of igniting the explosive substance or the mixture and bringing it to explosion by way of this, and by way of the gas pressure arisen by the explosion is led through a previously closed passage (203), and wherein a closure is held closed before an explosion by way of a gas spring,
**characterised in that**
the gas spring comprises a relief device, such that after the explosion and a compression of the gas spring, a discharge opening (208) in a gas spring chamber (206) of the gas spring is opened.

2. A method according to claim 1, wherein the ignition is effected in a separate chamber, and the explosion is led via a delay conduit (612) into the container (1), and there activates a main explosion.

3. A method according to claim 1 or 2, wherein the gas pressure which has arisen with the ignition, opens the closure against the force of the gas spring, and an opening for the escape of pressure waves out of the device (201) is released by way of this.

4. A method according to one of the claims 1 to 3, wherein the gas pressure of the explosion moves a piston (204) against the force of a gas spring, the piston (204) performs useful work, for example as a hammer or as a chisel, and towards the end of a piston path, an opening (203) for leading away the gas pressure or combustion gases of the explosion, is opened.

5. A method according to one of the preceding claims, wherein a closure of the passage (203) is opened by the explosion and subsequently is led back into a closure position again.

6. A method according to one of the preceding claims, wherein the gas pressure which arises with the ignition, activates a bar mechanism which releases the closure.

7. A method according to claim 6, wherein the gas pressure which has arisen in a separate chamber by the ignition, activates the bar mechanism.

8. A method according to one of the preceding claims, wherein, in the case of several flowable components, these are supplied to the container (1) separately.

9. A method according to one of the preceding claims, wherein as a component of an explosive mixture oxygen as an oxidant and/or a gaseous hydrocarbon compound such as ethane is used.

10. A method according to one of the preceding claims, wherein the gaseous explosive mixture is used under atmospheric overpressure.

11. A device (201) for producing pressure waves of a high intensity, comprising a pressure-tight container (1) with a supply opening (207) for introducing a flowable, explosive substance or flowable components which when mixed form an explosive mixture,
comprising an ignition device and a passage (203) for the directed escape of gas pressure arising due to the ignition of the explosive substance or mixture,
wherein the passage (203) comprises closure means and is kept closed by these closure means essentially until the point in time of the ignition, wherein the closure means can be led back into an initial closure position by means of a gas spring in the form of compressed gas in a closed volume or a gas spring chamber (206),
**characterised by**
a relief device for the gas spring in the form of a closable discharge opening (208) of the gas spring chamber (206).

12. A device (201) according to claim 11, with an essentially closed chamber (610) for an auxiliary explosion, with a delay conduit (612) for leading the auxiliary explosion into the pressure tight container (1) in order to trigger a main explosion.

13. A device (201) according to claim 11 or 12, wherein the relief device may be actuated via a plunger (209) impinged by a spring, and the plunger (209) in turn may be actuated by the closure means.

14. A device (201) according to claim 11, wherein the relief device contains a delay conduit which is connected with one end to the container (1), whose other end is connected to a valve (707) for the relief of the gas spring chamber (206), wherein the valve (707) may be actuated by an explosion pressure which is led through the delay conduit.

15. A device (201) according to one of the claims 11 to 14, wherein the device (201) defines a longitudinal axis and the passage (203) or several passages (203) is or are arranged in a manner such that one or several pressure waves leave the device (201) essentially in the direction of the longitudinal axis or essentially perpendicular to this longitudinal axis.

16. The use of the device (201) according to one of the claims 11 to 15 or of the method according to one of the claims 1 to 10 for cleaning boiler installations.

## Revendications

1. Procédé pour produire des ondes de choc de haute intensité en introduisant dans un récipient (1) résistant à la pression une substance explosive fluide ou des composants formant un mélange fluide rendu explosif par leur mélange, en allumant la substance explosive ou le mélange, en les amenant ainsi à exploser, en évacuant la pression de gaz formée par l'explosion par un passage (203) précédemment fermé et en maintenant avant l'explosion une fermeture fermée au moyen d'un ressort pneumatique,
**caractérisé en ce que**
le ressort pneumatique présente un mécanisme de délestage tel qu'une ouverture d'évacuation (208) ménagée dans une chambre (206) du ressort pneumatique est ouverte après l'explosion et une compression du ressort pneumatique.

2. Procédé selon la revendication 1, dans lequel l'allumage s'effectue dans une chambre séparée et l'explosion est amenée dans le récipient (1) par un conduit de retardement (612), pour y déclencher une explosion principale.

3. Procédé selon les revendications 1 ou 2, dans lequel la pression de gaz formée par l'allumage ouvre la fermeture en opposition au ressort pneumatique, ce qui libère une ouverture d'échappement des ondes de choc hors du dispositif (201).

4. Procédé selon l'une des revendications 1 à 3, dans lequel la pression de gaz de l'explosion déplace un piston (204) en opposition la force du ressort pneumatique, le piston (204) délivre un travail utile, par exemple sous la forme d'un marteau ou d'un ciseau, et une ouverture (203) d'évacuation de la pression de gaz ou des gaz de combustion de l'explosion est ouverte vers la fin du parcours du piston.

5. Procédé selon l'une des revendications précédentes, dans lequel une fermeture du passage (203) est ouverte par l'explosion et est ensuite ramenée dans une position de fermeture.

6. Procédé selon l'une des revendications précédentes, dans lequel la pression de gaz produite lors de l'allumage déclenche un mécanisme de verrou qui libère la fermeture.

7. Procédé selon la revendication 6, dans lequel la pression de gaz produite par l'allumage dans une chambre séparée déclenche le mécanisme de verrou.

8. Procédé selon l'une des revendications précédentes, dans lequel au cas où plusieurs composants fluides sont prévus, ces derniers sont amenés séparément dans le récipient (1).

9. Procédé selon l'une des revendications précédentes, dans lequel de l'oxygène servant d'agent d'oxydation et/ou un composé hydrocarbure gazeux, par exemple de l'éthane, est utilisé comme composant d'un mélange explosif.

10. Procédé selon l'une des revendications précédentes, dans lequel le mélange gazeux explosif est utilisé à une pression supérieure à la pression atmosphérique.

11. Ensemble (201) destiné à former des ondes de choc de haute intensité, présentant un récipient (1) résistant à la pression et doté d'une ouverture d'amenée (207) qui permet d'introduire une substance explosive fluide ou des composants fluides qui forment un mélange explosif lors de leur mélange, un ensemble d'allumage et un passage (203) permettant un dégagement orienté de la pression de gaz produite par l'allumage de la substance explosive ou du mélange,
le passage (203) présentant un moyen de fermeture et étant maintenu fermé par ce moyen de fermeture essentiellement jusqu'à l'instant de l'allumage,
le moyen de fermeture pouvant être ramené dans sa position initiale de fermeture à l'aide d'un ressort pneumatique qui présente la forme de gaz comprimé dans un volume fermé ou d'une chambre (206) à ressort pneumatique,
**caractérisé par**
un ensemble de délestage du ressort pneumatique qui présente la forme d'une ouverture d'évacuation (208) refermable de la chambre (206) du ressort pneumatique.

12. Ensemble (201) selon la revendication 11, présentant une chambre (610) essentiellement fermée et prévue pour une explosion auxiliaire, avec un conduit de ralentissement (612) qui amène l'explosion auxiliaire dans le récipient (1) résistant à la pression, pour déclencher une explosion principale.

13. Ensemble (201) selon l'une des revendications 11 et 12, dans lequel l'ensemble de délestage peut être actionné par un poussoir (209) sollicité par un ressort, le poussoir (209) pouvant être à son tour actionné par le moyen de fermeture.

14. Ensemble (201) selon la revendication 11, dans lequel l'ensemble de délestage contient un conduit de retardement relié par une extrémité au récipient (1), son autre extrémité étant reliée à une soupape (707) de délestage de la chambre (210) à ressort pneumatique, la soupape (707) pouvant être actionnée par la pression de l'explosion amenée par le conduit de retardement.

15. Ensemble (201) selon l'une des revendications 11 à 14, dans lequel l'ensemble (201) définit un axe longitudinal, le passage (203) ou plusieurs passages (203) étant disposés de telle sorte qu'une ou plusieurs ondes de choc quittent l'ensemble (201) essentiellement dans la direction de son axe longitudinal ou dans une direction essentiellement perpendiculaire à cet axe longitudinal.

16. Utilisation de l'ensemble (201) selon l'une des revendications 11 à 15 ou du procédé selon l'une des revendications 1 à 10 pour le nettoyage d'installations de chaudière.
